# EUROPÄISCHE PATENTANMELDUNG

(11) **EP 2 922 161 A1**
(43) Veröffentlichungstag der Anmeldung: **23.09.2015**
(21) Anmeldenummer: 15159354.8
(22) Anmeldetag: 17.03.2015
(51) Int. Cl.: H02G 3/22

(54) **Kabeldurchführung**

(30) Priorität: 20.03.2014 DE 102014103816
(71) Anmelder: Viessmann Werke GmbH & Co. KG, 35108 Allendorf (DE)
(72) Erfinder: Ernst-von-Drach, Michael, 35110 Altenlotheim (DE); Fitzke, Jörg-Michael, 59929 Brilon (DE)
(74) Vertreter: Wolf, Michael

(57) **Zusammenfassung**

Die Erfindung betrifft eine Kabeldurchführung, umfassend ein Wandelement (1) mit einer Wandöffnung (1.1), die mit einem mit dem Wandelement (1) bajonettartig zusammenwirkenden, von einem Kabel durchdrungenen und mit einem Drehbetätigungselement (2.1) versehenen Stopfenelement (2) verschließbar ausgebildet ist, wobei das Drehbetätigungselement (2.1) in Schließstellung des Stopfenelements (2) auf einer Seite des Wandelements (1) angeordnet ist. Nach der Erfindung ist vorgesehen, dass das Stopfenelement (2) in Schließstellung auf der anderen Seite des Wandelements (1) eine die Wandöffnung (1.1) vollständig überdeckende, am Wandelement (1) flach anliegende und ein Deckelelement bildende Kontur aufweist.

## Beschreibung

Die Erfindung betrifft eine Kabeldurchführung gemäß dem Oberbegriff des Patentanspruchs 1.

Eine Kabeldurchführung der eingangs genannten Art ist nach der DE 198 44 468 A1 bekannt. Diese besteht aus einem Wandelement mit einer Wandöffnung, die mit einem mit dem Wandelement bajonettartig zusammenwirkenden, von einem Kabel durchdrungenen und mit einem Drehbetätigungselement versehenen Stopfenelement verschließbar ausgebildet ist, wobei das Drehbetätigungselement in Schließstellung des Stopfenelements auf einer Seite des Wandelements angeordnet ist. Bei dieser Lösung sind in der Wandöffnung zur bajonettartigen Verbindung der Bauteile zwei Zähne vorgesehen, die mit in Schließstellung von der anderen Seite des Wandelements zugänglichen Nuten zusammenwirken. Das Drehbetätigungselement weist einen sechseckigen Querschnitt auf, so dass das Stopfenelement per Schraubenschlüssel betätigbar ist.

Der Erfindung liegt die Aufgabe zugrunde, eine Kabeldurchführung der eingangs genannten Art insbesondere sicherheitstechnisch zu verbessern.

Diese Aufgabe ist mit einer Kabeldurchführung der eingangs genannten Art durch die im Kennzeichen des Patentanspruchs 1 aufgeführten Merkmale gelöst.

Nach der Erfindung ist also vorgesehen, dass das Stopfenelement in Schließstellung auf der anderen Seite des Wandelements eine die Wandöffnung vollständig überdeckende, am Wandelement flach anliegende und ein Deckelelement bildende Kontur aufweist.

Mit anderen Worten zeichnet sich die erfindungsgemäße Lösung dadurch aus, dass das Stopfenelement wie ein glattflächiger, besonders bevorzugt flacher bzw. scheibenförmiger, und flach anliegender Deckel ausgebildet ist, der keine Angriffspunkte bzw. Angriffsflächen bietet, sprich, im Wandparallelquerschnitt gesehen gleichmäßig rund (zum Beispiel kreisförmig oder auch oval) ausgebildet ist, um zu verhindern, dass die vorzugsweise luftdicht ausgebildete Kabeldurchführung von dieser Seite auf einfache Weise wahlweise per Hand oder mit Hilfe eines Werkzeugs geöffnet werden kann.

Von besonderem Interesse ist eine solche Lösung bei so genannten Luftkästen von raumluftunabhängigen Heizungsgeräten, bei denen die Kabeldurchführung bei der Produktion des Gerätes zwar möglichst einfach zu montieren sein soll, es gleichzeitig aber wünschenswert ist, dass die Kabeldurchführung später von außerhalb des Luftkastens vom Anlagenbetreiber nicht mehr gelöst werden kann. Die Kabeldurchführung kann nur nach Öffnung des Luftkastens durch den Heizungsinstallateur (Fachkraft) gelöst werden.

Andere vorteilhafte Weiterbildungen ergeben sich aus den abhängigen Patentansprüchen.

Der Vollständigkeit halber wird noch auf das Patentdokument DE 10 2008 057 473 A1 hingewiesen, bei dem aber das Stopfenelement in Schließstellung die Wandöffnung nicht vollständig überdeckend ausgebildet ist (siehe insbesondere Figur 6 dieser Schrift). Außerdem lässt sich dieses Stopfenelement - im Gegensatz zum erfindungsgemäßen Stopfenelement - aufgrund seiner Form sehr leicht von beiden Wandseiten aus lösen.

Die erfindungsgemäße Kabeldurchführung einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

Es zeigt
- Figur 1: im Schnitt (entlang der Linie A-A gemäß Figur 2) die erfindungsgemäße Kabeldurchführung mit zwei Kabelsträngen;
- Figur 2: in Draufsicht von der Seiten das Wandelement, auf der das Drehbetätigungselement angeordnet ist;
- Figur 3: perspektivisch die erfindungsgemäße Kabeldurchfürhung von der drehbetätigungselementabgewandten Seite;
- Figur 4: perspektivisch das noch nicht mit dem Wandelement verbundene Stopfenelement;
- Figur 5: perspektivisch das lediglich durch die Wandöffnung gesteckte Stopfenelement;
- Figur 6: perspektivisch das gegenüber dem Wandelement um etwa 30° in Bezug auf die Stellung in Figur 5 verdrehte Stopfenelement; und
- Figur 7: perspektivisch die Kabeldurchführung in Schließstellung.

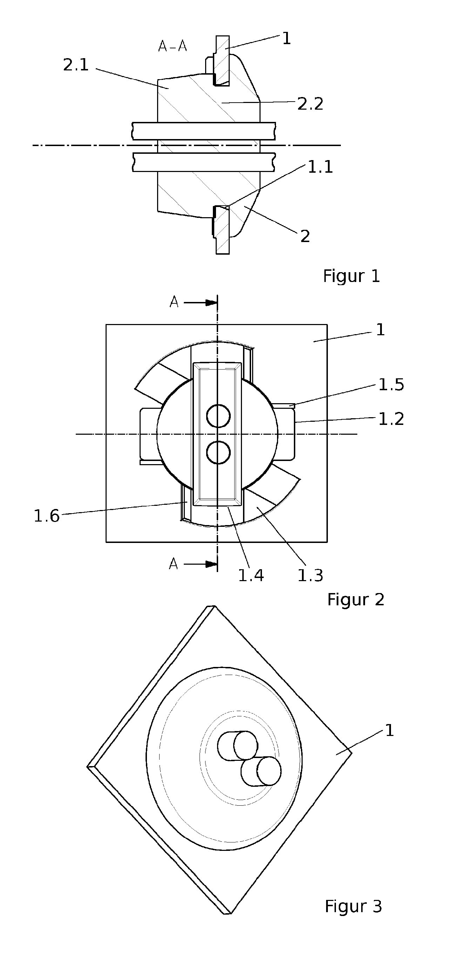

Die in den Figuren 1 bis 7 dargestellte Kabeldurchführung besteht in bekannter Weise zunächst aus einem vorzugs- und wahlweise aus Metall oder Kunststoff gebildeten Wandelement 1 mit einer Wandöffnung 1.1, die mit einem mit dem Wandelement 1 bajonettartig zusammenwirkenden, von einem Kabel durchdrungenen und mit einem Drehbetätigungselement 2.1 versehenen Stopfenelement 2 verschließbar ausgebildet ist, wobei das Drehbetätigungselement 2.1 in Schließstellung des Stopfenelements 2 auf einer Seite des Wandelements 1 angeordnet ist.

Der Begriff "Kabel" bedeutet im Rahmen dieser Beschreibung, dass mindestens ein Kabel bzw. eine elektrische Leitung vorgesehen ist; genauso gut kann der Begriff aber auch "mindestens ein Kabelstrang" bedeuten, also eine mehrpolige elektrische Leitung. In den Figuren sind zwei, jeweils fünfpolige elektrische Leitungen dargestellt, also zwei Kabelstränge.

Wesentlich für die erfindungsgemäße Kabeldurchführung ist nun, dass das vorzugsweise aus Kunststoff bzw. Gummi gebildete Stopfenelement 2 in Schließstellung auf der anderen Seite des Wandelements 1 eine die Wandöffnung 1.1 vollständig überdeckende, am Wandelement 1 flach anliegende und ein Deckelelement bildende Kontur aufweist.

Insbesondere aus Figur 1 und 3 ist ersichtlich, dass das Deckelelement dabei vorzugsweise scheibenförmig und/oder kreisförmig ausgebildet ist. Weiterhin ist in diesem Kontext bevorzugt vorgesehen, dass das Deckelelement einen Durchmesser aufweist, der mindestens dreimal so groß wie dessen Höhe ist.

Zur Ausbildung des vorgenannten Bajonettverschlusses ist ferner bevorzugt vorgesehen, dass die Wandöffnung 1.1 kreisförmig und mit zwei, vorzugsweise einander gegenüberliegenden und/ oder vorzugsweise rechteckigen Zusatzausnehmungen 1.2 ausgebildet ist.

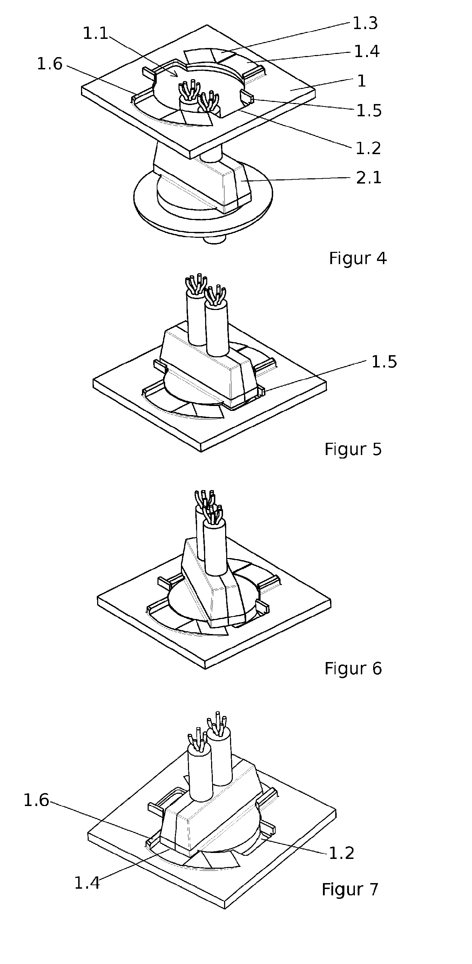

Wie insbesondere aus der Folge der Figuren 4 bis 7 ersichtlich, ist weiterhin besonders bevorzugt vorgesehen, dass das vorzugsweise quaderförmig ausgebildete Drehbetätigungselement 2.1 durch die Wandöffnung 1.1 und die Zusatzausnehmungen 1.2 hindurchsteckbar ausgebildet ist. Dabei weist das Deckelelement vorzugsweise (insbesondere bei kreisförmiger Gestaltung) einen Durchmesser auf, der größer als die Wandöffnung 1.1 einschließlich der beiden Zusatzausnehmungen 1.2 ausgebildet ist.

Ferner ist bevorzugt vorgesehen, dass das Drehbetätigungselement 2.1 in Schließstellung parallel zum Wandelement 1 gesehen breiter als die (an sich kreisförmige) Wandöffnung 1.1, aber kleiner als die Wandöffnung 1.1 einschließlich der beiden Zusatzausnehmungen 1.2 ausgebildet ist.

Weiterhin ist bevorzugt vorgesehen, dass das Wandelement 1 im Bereich zwischen der Zusatzausnehmung 1.2 und einer Drehendposition in Schließstellung zur Erzeugung unterschiedlicher Drehwiderstände und somit zur Steuerung der Dichtungskräfte Zonen verschiedener Wandstärken aufweist bzw. dass das elastisch ausgebildete Drehbetätigungselement 2.1 in Schließstellung wandstärkenbedingt einrastend ausgebildet ist. Insgesamt ist dabei vorzugsweise vorgesehen, dass das Drehbetätigungselement 2.1 innerhalb der Wandöffnung 1.1 um 90° verdrehbar ausgebildet ist. Bezüglich der genannten Zonen ist etwas konkreter betrachtet vorgesehen, dass das Wandelement 1 an einem im Drehbereich des Drehbetätigungselements 2.1 liegenden ersten Wandabschnitt 1.3 zwischen der Zusatzausnehmung 1.2 und einem zweiten Wandabschnitt 1.4 in Schließstellung dicker als der zweite Wandabschnitt 1.4 ausgebildet ist. Wie besonders gut aus Figur 1 und Figur 7 ersichtlich, ist weiterhin bevorzugt vorgesehen, dass das Wandelement 1 in Schließstellung mit einem bzw. dem Wandabschnitt 1.4 zwischen dem Drehbetätigungselement 2.1 und dem Deckelelement angeordnet ist.

Ferner ist bevorzugt vorgesehen, dass am Wandelement 1 ein mit dem Drehbetätigungselement 2.1 in Schließstellung zusammenwirkendes, eine weitere Verdrehung des Drehbetätigungselements 2.1 in Schließrichtung verhinderndes Anschlagselement 1.6 angeordnet ist. Darüber hinaus ist bevorzugt vorgesehen, dass an der Zusatzausnehmung 1.2 ein eine Drehung des Drehbetätigungselement 2.1 in eine der beiden Drehrichtungen (nämlich eine über die Öffnungsstellung hinausgehende Drehrichtung) verhinderndes Anschlagselement 1.5 angeordnet ist.

Wie wiederum besonders gut aus Figur 1 ersichtlich, ist weiterhin besonders bevorzugt vorgesehen, dass das Stopfenelement 2 in Schließstellung in senkrechter Richtung zum Wandelement 1 gesehen aus dem Drehbetätigungselement 2.1, aus einem Zwischenabschnitt 2.2 und aus dem Deckelelement gebildet ist. Dabei ist das vorgenannte Kabel bzw. sind die Kabelstränge durch das Drehbetätigungselement 2.1, durch den Zwischenabschnitt 2.2 und durch das Deckelelement hindurchgeführt, vorzugsweise eingegossen, ausgebildet. Außerdem ist schließlich der Zwischenabschnitt 2.2 in Schließstellung in senkrechter Richtung zum Wandelement 1 gesehen kreisförmig und in die Wandöffnung 1.1 passend ausgebildet.

Die erfindungsgemäße Kabeldurchführung funktioniert wie folgt:

Im ersten Schritt werden das Stopfenelement 2 und das Kabel miteinander verbunden. Dies kann einfach mittels Durchstecken, aber auch durch Umspritzen oder dergleichen erfolgen.

Im nächsten Schritt wird das mit dem Kabel versehene Stopfenelement 2 mit seinem Drehbetätigungselement 2.1 voran durch die Wandöffnung 1.1 gesteckt, und zwar in der Weise, dass das vorzugsweise quaderförmige Drehbetätigungselement 2.1 in Flucht mit den Zusatzausnehmungen 1.2 gebracht und mit diesem durch das Wandelement 1 hindurchgesteckt wird.

Diese Lage ist in Figur 5 dargestellt, wobei das als Anschlag wirkende Deckelelement verhindert, dass das Stopfenelement 2 vollständig durch die Wandöffnung 1.1 hindurchgesteckt werden kann.

Außerdem verhindert das Anschlagselement 1.5, dass das Drehbetätigungselement 2.1 in Bezug auf Figur 5 im Gegenuhrzeigersinn gedreht werden kann.

Im nächsten Schritt wird das Drehbetätigungselement 2.1 im Uhrzeigersinn gedreht (siehe Figur 6). Dabei erreicht es einen rampenförmigen Anstieg zum ersten Wandabschnitt 1.3, der dicker als der folgende Wandabschnitt 1.4 ausgebildet ist.

Dieser Wandabschnitt 1.4 wird nach weiterem Drehen erreicht, was in Figur 7 dargestellt ist. In dieser (elastizitätsbedingt) eingerasteten Position hat das Drehbetätigungselement 2.1 die Schließstellung erreicht und ist verriegelt, wobei außerdem mit dem Anschlagselement 1.6 dafür gesorgt ist, dass das Drehbetätigungselement 2.1 nicht noch weiter gedreht werden kann, es mithin bei einer Maximalverdrehung von etwa 90° bleibt.

In Bezug auf den vorgenannten Luftkasten befindet sich das Drehbetätigungselement 2.1 dabei innerhalb das Luftkastens (siehe Figur 2), während von außerhalb nur das Deckelelement zugänglich ist (siehe Figur 3).

Um die Kabeldurchführung gemäß Figur 7 wieder zu lösen, ist das Drehbetätigungselement 2.1 entsprechend wieder im Gegenuhrzeigersinn zu drehen, und zwar, bis wieder die Position gemäß Figur 5 erreicht ist. Aufgrund der eingerasteten Schließstellung ist dabei ein Lösen der Kabeldruchfürung durch Vibrationen praktisch ausgeschlossen.

### Bezugszeichenliste

1 Wandelement
1.1 Wandöffnung
1.2 Zusatzausnehmung
1.3 erster Wandabschnitt
1.4 zweiter Wandabschnitt
1.5 Anschlagselement
1.6 Anschlagselement
2 Stopfenelement
2.1 Drehbetätigungselement
2.2 Zwischenabschnitt

## Patentansprüche

1. Kabeldurchführung, umfassend ein Wandelement (1) mit einer Wandöffnung (1.1), die mit einem mit dem Wandelement (1) bajonettartig zusammenwirkenden, von einem Kabel durchdrungenen und mit einem Drehbetätigungselement (2.1) versehenen Stopfenelement (2) verschließbar ausgebildet ist, wobei das Drehbetätigungselement (2.1) in Schließstellung des Stopfenelements (2) auf einer Seite des Wandelements (1) angeordnet ist,
**dadurch gekennzeichnet,**
**dass** das Stopfenelement (2) in Schließstellung auf der anderen Seite des Wandelements (1) eine die Wandöffnung (1.1) vollständig überdeckende, am Wandelement (1) flach anliegende und ein Deckelelement bildende Kontur aufweist.

2. Kabeldurchführung nach Anspruch 1,
**dadurch gekennzeichnet,**
**dass** die Wandöffnung (1.1) kreisförmig und mit zwei, vorzugsweise einander gegenüberliegenden Zusatzausnehmungen (1.2) ausgebildet ist.

3. Kabeldurchführung nach Anspruch 2,
**dadurch gekennzeichnet,**
**dass** das Drehbetätigungselement (2.1) durch die Wandöffnung (1.1) und die Zusatzausnehmungen (1.2) hindurchsteckbar ausgebildet ist.

4. Kabeldurchführung nach Anspruch 2 oder 3,
**dadurch gekennzeichnet,**
**dass** das Deckelelement einen Durchmesser aufweist, der größer als die Wandöffnung (1.1) einschließlich der beiden Zusatzausnehmungen (1.2) ausgebildet ist.

5. Kabeldurchführung nach einem der Ansprüche 2 bis 4,
**dadurch gekennzeichnet,**
**dass** das Drehbetätigungselement (2.1) in Schließstellung parallel zum Wandelement (1) gesehen breiter als die Wandöffnung (1.1), aber kleiner als die Wandöffnung (1.1) einschließlich der beiden Zusatzausnehmungen (1.2) ausgebildet ist.

6. Kabeldurchführung nach einem der Ansprüche 2 bis 5,
**dadurch gekennzeichnet,**
**dass** das Wandelement (1) im Bereich zwischen der Zusatzausnehmung (1.2) und einer Drehendposition in Schließstellung zur Erzeugung unterschiedlicher Drehwiderstände Zonen verschiedener Wandstärken aufweist.

7. Kabeldurchführung nach einem der Ansprüche 2 bis 6,
**dadurch gekennzeichnet,**
**dass** das Wandelement (1) an einem im Drehbereich des Drehbetätigungselements (2.1) liegenden ersten Wandabschnitt (1.3) zwischen der Zusatzausnehmung (1.2) und einem zweiten Wandabschnitt (1.4) in Schließstellung dicker als der zweite Wandabschnitt (1.4) ausgebildet ist.

8. Kabeldurchführung nach einem der Ansprüche 1 bis 7,
**dadurch gekennzeichnet,**
**dass** das Wandelement (1) in Schließstellung mit einem Wandabschnitt (1.4) zwischen dem Drehbetätigungselement (2.1) und dem Deckelelement angeordnet ist.

9. Kabeldurchführung nach einem der Ansprüche 1 bis 8,
**dadurch gekennzeichnet,**
**dass** das Stopfenelement (2) in Schließstellung in senkrechter Richtung zum Wandelement (1) gesehen aus dem Drehbetätigungselement (2.1), aus einem Zwischenabschnitt (2.2) und aus dem Deckelelement gebildet ist.

10. Kabeldurchführung nach Anspruch 9,
**dadurch gekennzeichnet,**
**dass** der Zwischenabschnitt (2.2) in Schließstellung in senkrechter Richtung zum Wandelement (1) gesehen kreisförmig und in die Wandöffnung (1.1) passend ausgebildet ist.
